Europäisches Patentamt

European Patent Office

Office européen des brevets

(11) Veröffentlichungsnummer: **0 069 798**

**A1**

# (12) EUROPÄISCHE PATENTANMELDUNG

(21) Anmeldenummer: 81105570.6

(22) Anmeldetag: 15.07.81

(51) Int. Cl.³: **F 16 B 5/06**

(43) Veröffentlichungstag der Anmeldung:
19.01.83 Patentblatt 83/3

(84) Benannte Vertragsstaaten:
AT BE CH DE FR GB IT LI LU NL SE

(71) Anmelder: MAGE AG
Industriestrasse
CH-1781 Courtaman(CH)

(72) Erfinder: Gehring, Manfred
c/o Mage AG
Industriestrasse CH-1781 Courtaman(CH)

(74) Vertreter: Patentanwälte Kohler - Schwindling - Späth
Hohentwielstrasse 41
D-7000 Stuttgart 1(DE)

(54) **Bauelement zum Befestigen von Bauplatten an Stahlträgern.**

(57) Ein Bauelement zum Befestigen von Bauplatten an Stahlträgern weist einen im Querschnitt vorzugsweise rechteckigen Tragkörper (4) mit einer an der Außenseite eines Wandabschnittes angeordneten, einen Clip bildenden Federzunge (6) auf. Vorzugsweise besteht der Hohlkörper aus einem das Eindrehen selbstschneidender Schrauben zulassenden Material, insbesondere aus feuerverzinktem Stahlblech. Ein solches Bauelement läßt sich mit dem von der Federzunge gebildeten Clip (6) auf die Ränder der Flansche und Schenkel von Stahlträgern derart aufschieben, daß der rohrförmige Hohlkörper an der Außenseite des Trägers anliegt und als Anschlagfläche für die zu befestigenden Bauplatten dient, die dann an dem Bauelement befestigbar sind, beispielsweise mittels selbstschneidender Schrauben, die in dem Tragkörper (4) eingedreht werden, ggfls. aber auch durch Nieten oder Kleben.

Fig. 1

EP 0 069 798 A1

Anmelderin:                    Stuttgart, den 6.7.1981

MAGE AG                        P 4073 EP S/Lö

Industriestraße

CH 1781 Courtaman

Schweiz


Vertreter:

Kohler - Schwindling - Späth
Patentanwälte
Hohentwielstraße 41

7000 Stuttgart 1

# Bauelement zum Befestigen von
# Bauplatten an Stahlträgern


Es besteht häufig ein Bedarf, freistehende oder an Decken
freiliegende Strahlträger zu verkleiden. Eine solche Verkleidung macht erhebliche Schwierigkeiten, weil die
Stahlträger selbst keine Möglichkeit bieten, Verkleidungselemente anzubringen. Deshalb werden Stahlträger häufig mit einem Putzträger umgeben und dann verputzt. Es ist
auch bekannt, die Hohlräume von Trägern auszumauern und
dann Verkleidungen an dem Mauerwerk anzubringen. Diese
Verfahren sind umständlich und kostspielig. Plattenförmige Verkleidungen mußten bisher an Strukturen angebracht werden, welche an die zu verkleidenden Träger angrenzen. Die hierzu erforderlichen Maßnahmen sind ebenfalls sehr umständlich und kostspielig und haben außerdem einen großen Platzbedarf.

Es würde demgegenüber einen erheblichen Fortschritt bedeuten, wenn die Möglichkeit bestünde, Bauplatten unmittelbar an Stahlträgern anzubringen. Der Erfindung liegt
die Aufgabe zugrunde, eine solche Möglichkeit zu schaffen.

Diese Aufgabe wird nach der Erfindung durch ein Bauelement
zum Befestigen von Bauplatten an Stahlträgern gelöst, das
gekennzeichnet ist durch einen Tragkörper mit einem ebenen
Wandabschnitt und einer an der Außenseite dieses Wandabschnittes angeordneten, einen Clip bildenden Federzunge.

Das erfindungsgemäße Bauelement kann auf die Ränder der
Flansche und Schenkel von Stahlträgern beliebiger Form
derart aufgeschoben werden, daß es mit seinem ebenen
Wandabschnitt an der einen und mit der Federzunge an der
anderen Seite eines solchen Steges oder Schenkels anliegt und durch die Klemmwirkung der Federzunge kraftschlüssig gehalten ist. Bauplatten beliebiger Art lassen sich dann unter Verwendung üblicher Verbindungsmittel ohne weiteres an diesem Bauelement befestigen.
Dabei bilden dann die Bauplatten Verbindungsglieder

./.

zwischen mehreren solcher Bauelemente, die an dem Träger so angebracht sein können, daß sie in Verbindung
mit den Bauplatten eine formschlüssige Verbindung ergeben.

Der Tragkörper des Bauelementes kann eine der Art und
Anordnung der Träger sowie der gewünschten Anordnung der
Bauplatten angepaßte Querschnittsform aufweisen. Im allgemeinen wird der Hohlkörper einen rechteckigen Querschnitt haben, weil ein rechteckiger Querschnitt für die
meisten Anwendungsfälle geeignet ist.

Das erfindungsgemäße Bauelement kann aus den verschiedensten Werkstoffen bestehen, insbesondere aus Kunststoff. Vorzugsweise wird ein Material gewählt, welches
das Eindrehen selbstschneidender Schrauben gestattet.
Die Verwendung selbstschneidender Schrauben als Verbindungsmittel zwischen Platten und Bauelement ist besonders
einfach und rationell. Um den Platten schon vor der endgültigen Befestigung einen gewissen Halt zu geben, kann
der Tragkörper mit dorn- oder hakenartigen Vorsprüngen
versehene Wandabschnitte aufweisen. Die gewöhnlich
weichen Bauplatten können dann durch einfaches Aufdrücken
auf diese Vorsprünge zunächst fixiert und dann ohne Mühe
befestigt werden.

Es könnte aber auch der Tragkörper mit einer Klebschicht
versehene Wandabschnitte aufweisen, die auf einfache
Weise das Aufkleben der zu befestigenden Platten ermöglichen. Weiterhin wäre auch die Verwendung von Nietverbindungen denkbar. Insbesondere, wenn die Verbindung der
Platten mit dem Bauelement durch Schrauben oder Nieten
erfolgen soll, ist die Ausbildung des Tragkörpers als
Hohlkörper besonders vorteilhaft.

./.

Für den Fall, daß von den anzubringenden Verkleidungen feuerhemmende Eigenschaften verlangt werden, ist es von Vorteil, daß das erfindungsgemäße Bauelement zwischen dem Flansch oder Schenkel des Stahlträgers und der dazu parallelen Verkleidungsplatte angeordnet ist und dadurch die Verkleidungsplatte im Abstand von dem Stahlträger hält. Um bei Bedarf auch dazu senkrechte Verkleidungsplatten im Abstand vom Träger zu halten, sieht eine Ausführungsform der Erfindung vor, daß die Wurzel der Federzunge gegenüber dem Rand des Tragkörpers in Richtung auf die Mitte des ebenen Wandabschnittes versetzt ist. Auf diese Weise ist gewährleistet, daß der Tragkörper des Bauelementes über den Rand des Flansches oder Schenkels des Stahlträgers übersteht und auch die an diesem Rand anliegende Verkleidungsplatte im Abstand von dem Stahlträger gehalten ist.

Um einen sicheren Sitz des Bauelementes auf dem Flansch oder Schenkel des Stahlträgers zu gewährleisten, kann in weiterer Ausgestaltung der Erfindung die Federzunge an ihrer dem benachbarten Wandabschnitt des Tragkörpers zugewandten Innenseite widerhakenartige Vorsprünge aufweisen. Weiterhin ist es in dieser Hinsicht vorteilhaft, wenn die Federzunge im Querschnitt S-förmig gebogen ist.

Eine bevorzugte Ausführungsform des erfindungsgemäßen Bauelementes, die gleichzeitig besonders einfach zu handhaben ist, eine hohe Stabilität der damit hergestellten Verkleidung und hohen Feuerschutz gewährleistet und endlich auch einfach und billig herstellbar ist, besteht aus vorzugsweise feuerverzinktem Stahlblech. Ein solches Bauelement kann einteilig aus einem mehrfach abgewinkelten Blechstreifen bestehen, dessen Abschnitte sich im Bereich des ebenen Wandabschnittes überlappen und an dessen im Bereich des ebenen Wandabschnittes außen
liegenden Abschnitt die Federzunge anschließt. Dabei kann
von den einander überlappenden Abschnitten des Blechstreifens der eine an seinen Rändern Aussparungen und der
andere Lappen aufweisen, die den Rand des einen Abschnittes im Bereich der Aussparungen umgreifen. Die Vorsprünge an der Federzunge und/oder den Wandabschnitten können
dann einfach von aus dem Stahlblech herausgedrückten, an
ihren Enden spitzen Lappen gebildet werden.

Die Erfindung wird im folgenden anhand der in der Zeichnung dargestellten Ausführungsbeispiele näher beschrieben und erläutert. Die der Beschreibung und der Zeichnung
zu entnehmenden Merkmale können bei anderen Ausführungsformen der Erfindung einzeln für sich oder zu mehreren
in beliebiger Kombination Anwendung finden. Es zeigen

Fig. 1          ein Befestigungselement nach der Erfindung
                im Querschnitt,

Fig. 2          das Befestigungselement nach Fig. 1 teilweise im Schnitt und teilweise in Ansicht
                längs der Linie II-II,

Fig. 3          einen Querschnitt durch einen unter Verwendung von Bauelementen nach den Fig. 1
                und 2 verkleideten Doppel-T-Träger,

Fig. 4          einen Querschnitt ähnlich Fig. 1 durch
                eine weitere Ausführungsform eines Befestigungselementes nach der Erfindung,

Fig. 5          eine Draufsicht auf das Befestigungselement nach Fig. 4 und

Fig. 6          einen Querschnitt ähnlich Fig. 1 durch
                eine dritte Ausführungsform eines Befestigungselementes nach der Erfindung in Verbindung mit strichpunktierten Abschnitten
                eines Trägers und von Verkleidungsplatten.

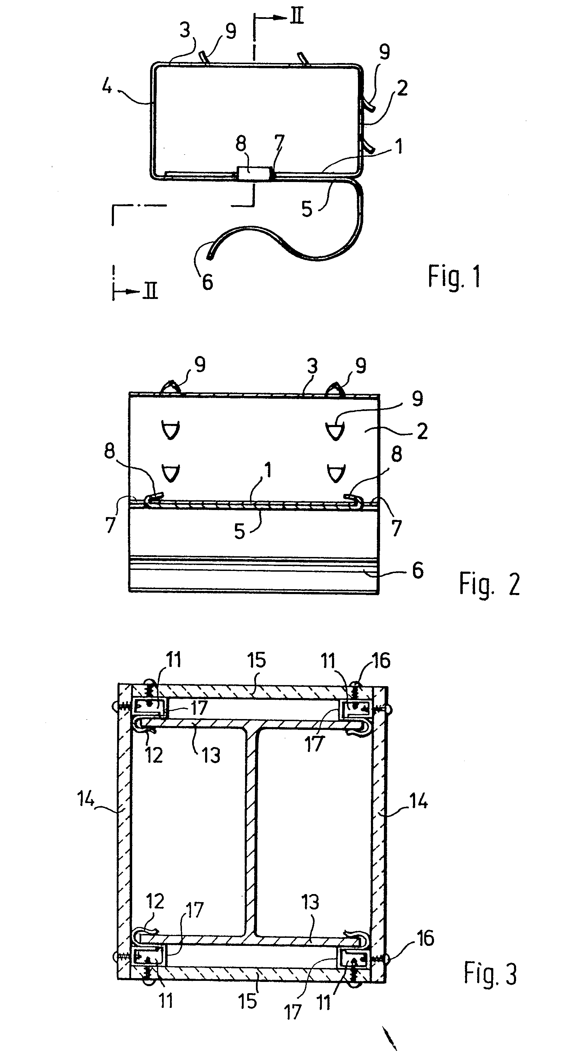

Das in den Fig. 1 und 2 dargestellte Bauelement besteht
aus einem Blechstreifen, der vier im rechten Winkel zueinander stehende Abschnitte 1, 2, 3 und 4 aufweist, welche die Wände eines im Querschnitt rechteckigen, rohrförmigen Hohlkörpers bilden. An der Außenseite des am
einen Ende des Blechstreifens angeordneten Abschnittes 1
liegt ein weiterer Abschnitt 5 an, an dessen Rand sich
eine im wesentlichen S-förmig gebogene Federzunge 6 anschließt, die parallel zu dem von den beiden Abschnitten
1 und 5 des Blechstreifens gebildeten Wandabschnitt des
Hohlkörpers verläuft und eine Art Clip bildet. Von den
beiden aneinander anliegenden Abschnitten 1 und 5 des
Blechstreifens weist der innere Abschnitt 1 im Bereich
der Mitte seiner Ränder Aussparungen 7 auf, während am
anderen Abschnitt 5 Lappen 8 angebracht sind, die den
Rand des Abschnittes 1 im Bereich der Aussparungen 7 umgreifen. Auf diese Weise wird eine formschlüssige Verbindung zwischen den Abschnitten 1 und 5 hergestellt, die
verhindern, daß die beiden Abschnitte gegeneinander verschiebbar sind, so daß der von den Abschnitten 1 bis 5
gebildete Hohlkörper eine hohe Formstabilität aufweist.
Die Wandabschnitte 2 und 3 sind mit dornartigen Vorsprüngen 9 versehen, die von an ihren Enden spitzen Lappen
gebildet werden, die aus dem Blechstreifen herausgedrückt worden sind.

./.

Das als Ausführungsbeispiel dargestellte Bauelement besteht aus Stahlblech einer Qualität und Dicke, die das Durchschneiden des Stahlbleches mit selbstschneidenden Schrauben gestattet. Die Dicke liegt vorzugsweise im Bereich zwischen 0, 5 und 1,0 mm und beträgt bei dem dargestellten Ausführungsbeispiel 0,65 mm. Weiterhin ist das in den Fig. 1 und 2 dargestellte Bauelement feuerverzinkt, um eine gute Korrosionsbeständigkeit zu gewährleisten.

Wie in Fig. 3 veranschaulicht, lassen sich die erfindungsgemäßen Bauelemente auf die Ränder der Flansche oder Schenkel eines Trägers in der Weise aufschieben, daß der Hohlkörper an der einen und die Federzunge an der anderen Seite eines solchen Flansches oder Schenkels anliegt. Bei dem in Fig. 3 dargestellten Anwendungsbeispiel sind die Bauelemente 11 auf die Ränder der Flansche 13 eines Doppel-T-Trägers derart aufgesetzt, daß deren von den Hohlkörpern gebildeten Tragkörper 17 jeweils an der Außenseite und die Federzungen 12 an der Innenseite der Flansche anliegen. An den Außenseiten der Tragkörper 17 liegen jeweils Bauplatten 14 und 15 an, die an den Bauelementen 11 mittels die Wandabschnitte der Tragkörper 17 durchdringender, selbstschneidender Schrauben 16 befestigt sind.

Vor der Befestigung werden die relativ weichen Bauplatten auf die in den Fig. 1 und 2 dargestellten Vorsprünge 9 aufgedrückt und dadurch in ihrer Lage fixiert, so daß nicht mehrere Arbeitskräfte benötigt werden, um die Bauplatten bis zu ihrer Befestigung am Platz zu halten.

./.

Es ist ersichtlich, daß die zunächst nur kraftschlüssig
auf den Flanschen 13 des Trägers gehaltenen Bauelemente
11 durch die Bauplatten 14 und 15 derart verbunden und
fixiert werden, daß sich eine formschlüssige Verbindung
zwischen der aus den Bauplatten 14, 15 und den Bauelementen 11 bestehenden Verkleidung und den Flanschen 13 des
Trägers ergibt.

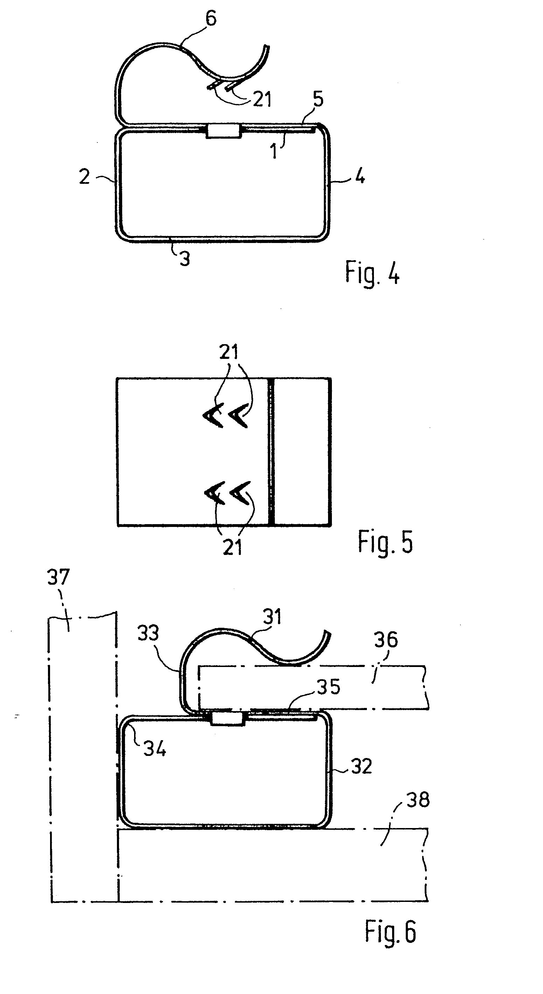

Die in den Fig. 4 und 5 dargestellte Ausführungsform
eines Bauelementes unterscheidet sich von der Ausführungsform nach den Fig. 1 und 2 darin, daß die S-förmig gebogene Federzunge 6 mit eingestanzten und aufgebogenen,
widerhakenartigen Vorsprüngen 21 versehen ist, die dem
ebenen Wandabschnitt 5 gegenüberstehen und dem freien
Ende der Federzunge 6 abgewandt sind. Diese widerhakenartigen Vorsprünge 21 erhöhen die Haftung des Bauelementes auf dem Flansch oder Schenkel eines Trägers und erleichtern dadurch das Anbringen der Bauplatten. Dagegen
fehlen hier Vorsprünge an Wandabschnitten, so daß diese
Ausführungsform besonders zum Anbringen harter Bauplatten
geeignet ist, die nicht auf Vorsprünge aufdrückbar sind.

Da das Bauelement nach den Fig. 4 und 5 im übrigen ebenso ausgebildet ist wie das Bauelement nach den Fig. 1 und
2, sind seine Bestandteile mit den gleichen Bezugsziffern
versehen wie in den Fig. 1 und 2 und werden hier auch
nicht mehr näher erläutert.

Bei den Ausführungsformen nach den Fig. 1 und 2 sowie
4 und 5 erstreckt sich der Wandabschnitt 5, von dessen
Ende die Zunge 6 ausgeht, bis zu der entsprechenden Kante des rechteckigen Hohlkörpers, der von den Wandabschnitten 1 bis 4 gebildet wird. Dementsprechend reicht der Rand des Flansches oder Schenkels eines Trägers
bis nahe zu der zu diesem Flansch oder Schenkel senkrechten Außenwand 2 des Hohlkörpers, und eine an dieser
Außenwand angebrachte Bauplatte hat nur einen sehr geringen Abstand von dem Träger. Dagegen sind die parallel
zu dem Flansch oder Schenkel angeordneten Bauplatten
durch den Tragkörper des erfindungsgemäßen Bauelementes
von dem Träger getrennt. Diese Trennung ist für einen
Feuerschutz sehr günstig. Die in Fig. 6 dargestellte
Ausführungsform der Erfindung ermöglicht es, auch die
senkrecht zu dem Flansch oder Schenkel angeordneten Bauplatten in angemessenem Abstand vom Träger anzuordnen.
Wie Fig. 6 zeigt, ist zu diesem Zweck die Federzunge 31
am Tragkörper 32 derart angeordnet, daß ihre Wurzel 33
gegenüber dem Rand 34 des Tragkörpers in Richtung auf
die Mitte des ebenen Wandabschnittes 35 versetzt ist.
Demgemäß steht der Tragkörper 32 über den in Fig. 6
strichpunktiert angedeuteten Flansch 36 eines Trägers
so weit über, daß die zu diesem Flansch senkrechte, ebenfalls strichpunktiert angedeutete Bauplatte 37 in einem
erheblichen Abstand vom Rand des Flansches 36 verläuft.
Bezüglich der zum Flansch 36 parallelen Bauplatte 38 hat
sich durch die modifizierte Ausbildung des erfindungsgemäßen Bauelementes nach Fig. 6 nichts geändert.

Es versteht sich, daß die Erfindung nicht auf die dargestellten Ausführungsbeispiele beschränkt ist. Insbesondere können Bauelemente nach der Erfindung auch aus
anderen Werkstoffen als Stahlblech hergestellt sein,
insbesondere aus Kunststoff, wenn keine Feuerschutzbestimmungen die Anwendung feuerfester Befestigungselemente vorschreiben. Es wäre auch denkbar, den zur Befestigung der Bauplatten dienenden Tragkörper aus einem anderen Material herzustellen als den zum Aufsetzen des

./.

Bauelementes auf den Träger dienenden Clip. Weiterhin
kann die Befestigung der Bauplatten außer durch selbstschneidende Schrauben auch beispielsweise mittels Nieten
oder auch durch Kleben erfolgen. Zu diesem Zweck können
Wandabschnitte des Tragkörpers mit Klebemitteln versehen
sein. Dabei wäre es auch möglich, den dem Flansch oder
Schenkel des Trägers zugewandten Wandabschnitt mit einer
Klebeschicht zu versehen, um die Befestigung des Bauelementes am Träger zu verbessern. Ebenso versteht es
sich, daß es eine Vielzahl von Anwendungsmöglichkeiten
für das erfindungsgemäße Bauelement gibt, wie beispielsweise auch die Anbringung von Verkleidungsplatten an der
Unterseite einer Anzahl parallel zueinander angeordneter
Träger zur Bildung einer Art abgehängter Decke.

Patentansprüche

1. Bauelement zum Befestigen von Bauplatten an Stahlträgern, gekennzeichnet durch einen Tragkörper mit
   einem ebenen Wandabschnitt (1, 5) und einer an der
   Außenseite dieses Wandabschnittes angeordneten, einen Clip bildenden Federzunge (6).

2. Bauelement nach Anspruch 1, dadurch gekennzeichnet,
   daß der Tragkörper einen rechteckigen Querschnitt
   aufweist.

3. Bauelement nach Anspruch 1 oder 2, dadurch gekennzeichnet, daß der Tragkörper aus einem Material besteht, welches das Eindrehen selbstschneidender
   Schrauben (16) gestattet.

4. Bauelement nach einem der vorhergehenden Ansprüche,
   dadurch gekennzeichnet, daß der Tragkörper mit dorn-
   oder hakenartigen Vorsprüngen (9) versehene Wandabschnitte (2, 3) aufweist.

5. Bauelement nach einem der vorhergehenden Ansprüche,
   dadurch gekennzeichnet, daß der Tragkörper mit einer
   Klebschicht versehene Wandabschnitte aufweist.

6. Bauelement nach einem der vorhergehenden Ansprüche,
   dadurch gekennzeichnet, daß der Tragkörper als Hohlkörper ausgebildet ist.

./.

7. Bauelement nach einem der vorhergehenden Ansprüche,
dadurch gekennzeichnet, daß die Wurzel (33) der
Federzunge (31) gegenüber dem Rand (34) des Tragkörpers (32) in Richtung auf die Mitte des ebenen
Wandabschnittes (35) versetzt ist.

8. Bauelement nach einem der vorhergehenden Ansprüche,
dadurch gekennzeichnet, daß die Federzunge (6) an
ihrer dem benachbarten Wandabschnitt (5) des Tragkörpers zugewandten Innenseite widerhakenartige
Vorsprünge (21) aufweist.

9. Bauelement nach einem der vorhergehenden Ansprüche,
dadurch gekennzeichnet, daß die Federzunge (6) im
Querschnitt S-förmig gebogen ist.

10. Bauelement nach einem der Ansprüche 6 bis 9, dadurch
gekennzeichnet, daß es aus Stahlblech besteht.

11. Bauelement nach Anspruch 10, dadurch gekennzeichnet,
daß es einteilig aus einem mehrfach abgewinkelten
Blechstreifen besteht, dessen Abschnitte (1, 5) sich
im Bereich des ebenen Wandabschnittes überlappen und
an dessen im Bereich des ebenen Wandabschnittes außen
liegenden Abschnitt (5) die Federzunge (6) anschließt.

12. Bauelement nach Anspruch 11, dadurch gekennzeichnet,
daß von den einander überlappenden Abschnitten (1, 5)
des Blechstreifens der eine Abschnitt (1) an seinen
Rändern Aussparungen (7) und der andere Abschnitt (5)
Lappen (8) aufweist, die den Rand des einen Abschnittes (1) im Bereich der Aussparungen (7) umgreifen.

13. Bauelement nach einem der Ansprüche 10 bis 12
und 4 und/oder 8, dadurch gekennzeichnet, daß
die dorn- oder hakenartigen Vorsprünge (9) und/
oder die widerhakenartigen Vorsprünge (21) von
aus dem Stahlblech herausgedrückten, an ihren
Enden spitzen Lappen gebildet werden.

14. Bauelement nach einem der Ansprüche 10 bis 13,
dadurch gekennzeichnet, daß das Stahlblech feuerverzinkt ist.

Fig. 1

Fig. 2

Fig. 3

0069798

Fig. 4

Fig. 5

Fig. 6

**0069798**

Nummer der Anmeldung

Europäisches Patentamt

**EUROPÄISCHER RECHERCHENBERICHT**

EP 81 10 5570.6

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| Y | DE - U - 6 602 947 (ENDER) <br> * Fig. 2 * | 1,2,5, 7 | F 16 B 5/06 |
| Y | GB - A - 1 150 079 (RAYMOND) <br> * Fig. 1 bis 3 * | 1,4,8 | |
| Y | GB - A - 1 284 411 (COX & SON) <br> * Fig. 2 * | 1,2 | |
| Y | GB - A - 1 478 017 (HUDSON) <br> * Fig. 3 * | 1 | **RECHERCHIERTE SACHGEBIETE (Int. Cl.³)** |
| Y | US - A - 3 279 729 (BUTTRISS) <br> * Fig. 6 * | 1,2 | F 16 B 5/06 <br> F 16 B 7/04 |
| Y | US - A - 3 809 358 (HAZELEY) <br> * Fig. 3 * <br> & DE - A - 2 302 013 | 1 | |
| Y | US - A - 3 811 241 (MATTIX) <br> * Fig. 3 * | 1,2,9 | |
| Y | US - A - 3 830 034 (KUPERSMIT) <br> * Fig. 3 * | 1,2 | **KATEGORIE DER GENANNTEN DOKUMENTE** |
| Y | US - A - 3 881 293 (CONVILLE) <br> * Fig. 2 * | 1,2 | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde lie- gende Theorien oder Grund- sätze <br> E: älteres Patentdokument, das jedoch erst am oder nach dem Anmeldedatum veröffentlicht worden ist <br> D: in der Anmeldung angeführtes Dokument <br> L: aus andern Gründen ange- führtes Dokument |
| Y | US - A - 3 902 298 (RATLIFF ,JR.) <br> * Fig. 1 * | 1,2 | |

**KLASSIFIKATION DER ANMELDUNG (Int. Cl.³)**

&: Mitglied der gleichen Patent- familie, übereinstimmendes Dokument

| | Der vorliegende Recherchenbericht wurde für alle Patentansprüche erstellt. | | |
|---|---|---|---|
| X | | | |
| Recherchenort <br> Berlin | Abschlußdatum der Recherche <br> 23-02-1982 | Prüfer <br> ZAPP | |

EPA form 1503.1  06.78